# EUROPÄISCHE PATENTSCHRIFT

(11) **EP 2 138 811 B1**
(45) Veröffentlichungstag und Bekanntmachung des Hinweises auf die Patenterteilung: **19.09.2012**
(21) Anmeldenummer: 09008067.2
(22) Anmeldetag: 19.06.2009
(51) Int. Cl.: G01G 19/414, G01G 23/42, G07F 7/02, G07G 1/00

(54) **Verfahren zum Betrieb einer Ladenwaage**
Method for operating shop scales
Procédé destiné au fonctionnement d'une balance de chargement

(30) Priorität: 23.06.2008 DE 102008029418
(43) Veröffentlichungstag der Anmeldung: 30.12.2009
(73) Patentinhaber: Bizerba GmbH & Co. KG, 72336 Balingen (DE)
(72) Erfinder: Schick, Frank, 72461 Albstadt (DE); Andronic-Gorcea, Tudor, 8500 Frauenfeld (CH)
(74) Vertreter: Wagner, Jürgen

(56) Entgegenhaltungen:
- DE-A1-102006 057 948
- US-A1- 2004 026 133
- US-B1- 6 779 722

## Beschreibung

Die Erfindung betrifft ein Verfahren zum Betrieb einer Ladenwaage zum Wiegen von Wiegegut nach den Merkmalen des Oberbegriffs des Anspruchs 1.

Aus der Praxis sind Waagen bekann, die eine biometrische Identifikation der Benutzer vornehmen.

So zeigt die WO 2005/076813 A2 eine öffentlich zugängliche Personenwaage für Fitness-Studios, die mittels einer biometrischen Identifikation persönliche Daten wie Körpergewicht oder Body-Maß Index vor unberechtigtem Zugriff schützt.

Aus der EP 1 320 730 B1 ist eine Laborwaage bekannt, bei der zur Verbesserung der Wiegeergebnisse unterschiedliche Parameter der Laborwaage in unterschiedlichen Benutzerprofilen speicherbar sind. Über eine Erkennungsvorrichtung werden unterschiedliche Personen erkannt und damit ein vorab gespeicherter Parametersatz aufgerufen.

Aus der US 2004/026133 ist eine Ladenwaage bekannt, wobei die einzelnen Vorgänge einzelnen Bedienungspersonen zugeordnet sein können, beispielsweise dann, wenn in einem Verkaufsgeschäft ein Kunde von einer Person bedient wird. In diesem Fall erfolgt die Erzeugung einer Identifikationssignale durch die Bedienungsperson selbst oder der Bedienungsperson fest zugeordneten Signalgeber.

Im Einzelhandel werden Waagen verwendet, um Lebensmittel wie z. B. Fleisch- oder Wurstwaren oder Käse entsprechend den Kundenwünschen abzupacken. Dabei identifizieren sich die Bediener der Waagen durch Eingabe eines Codes oder durch einen eindeutigen Schlüssel.

In der Praxis des Einzelhandels ist es wichtig, einen Bedienvorgang möglichst einfach zu gestalten und dabei mögliche Fehlbedienungen zu verhindern. Dies ermöglicht eine rasche und Zufriedenstellende Bedienung eines Kunden, insbesondere, wenn der Andrang zu sogenannten Stoßzeiten sehr groß ist.

Es ist Aufgabe der vorliegenden Erfindung ein Verfahren für den Betrieb einer Waage anzugeben, das für einen Benutzer einfach zu bedienen ist, eine hohe Fehlbediensicherheit aufweist und dabei insbesondere ein flexibles und schnelles Bedienen der Kunden ermöglicht.

Die Aufgabe wird erfindungsgemäß durch ein Verfahren gemäß den Merkmalen des Anspruchs 1 gelöst.

Bei einer Waage wird eine biometrische Benutzeridentifikation durchgeführt, indem zuerst in einem Personendatenspeicher biometrische Bedienerdaten von Bedienern abgelegt werden. Bei einem darauffolgenden Wiegevorgang werden über einen biometrischen Sensor biometrische Bedienerdaten erfasst und mit den in dem Personendatenspeicher abgelegten Bedienerdaten verglichen. Durch den Vergleich wird der Bediener der Waage identifiziert und eine Bedieneridentität festgelegt. Für eine effiziente und schnelle Bedienung ist es erforderlich, dass die Benutzererkennung reibungslos funktioniert. Dies bedingt, dass die Qualität der in dem Personendatenspeicher abgelegten Daten ausschlaggebend ist, für die Trefferquote der Benutzererkennung. Um die Qualität dieser Daten zu sichern ist vorgesehen, dass diese Daten sozusagen im laufenden Betrieb angepasst werden. Dazu kann als Maß für die Güte der Identifikation eine vorzugsweise einstellbare Toleranzschwelle bestimmt werden. Bei Überschreiten der Toleranzschwelle erfolgt die Zuordnung der Bedieneridentität zu den Wiegedaten automatisch durch eine Steuerungsvorrichtung. Bei Unterschreiten eines bestimmten Wertes der Toleranzschwelle wird dem Benutzer eine Auswahl an wahrscheinlichen Bedienern angezeigt, aus der der Benutzer manuell die richtige Auswahl treffen kann. Die Anzeige der Benutzer erfolgt dabei insbesondere in einem als Touch-Screen ausgeführten Display der Waage. Nachdem der Benutzer die Auswahl manuell getroffen hat, werden die in dem Personendatenspeicher hinterlegten biometrischen Daten des ausgewählten Bedieners von der Steuerungsvorrichtung an die über den biometrischen Sensor erfassten Daten angepasst. Dadurch ergibt sich eine aktuelle und fortlaufende Aktualisierung der gespeicherten Daten und somit eine hohe Datenqualität. Gesonderte Pflegemaßnahme oder Eingaben sind dafür nicht nötig, sondern die Anpassung erfolgt während des normalen Betriebes der Waage durch eine intuitive Bedienung.

Die Steuerungsvorrichtung kann dabei als separates Modul ausgebildet sein, das außerhalb der Waage angeordnet ist und mit der Waage verbunden wird. Die Steuerungsvorrichtung kann alternativ auch innerhalb einer Waage angeordnet sein. Das Modul der Steuerungsvorrichtung kann als Hardwaremodul mit einem eigenen Mikroprozessor und eigenem Speicher und einer Kommunikationsschnittstelle ausgebildet sein. Das Modul kann alternativ auch als Softwaremodul ausgebildet sein und auf einer bereits vorhandenen Hardwarearchitektur, z. B. einem Server, implementiert sein.

Insbesondere kann vorgesehen sein, dass eine Waage innerhalb eines Waagenverbundes mit mehreren verbundenen Waagen eine Steuerungsvorrichtung aufweisen, die als zentrale Steuerungsvorrichtung weitere Waagen steuert, die an den Waagenverbund angeschlossen sind.

Die biometrischen Daten können in dem Personendatenspeicher als Kopie der über den biometrischen Sensor erfassten Daten abgespeichert werden. Bevorzugt werden aus den erfassten bzw. gemessenen Daten charakteristische zu einer Identifizierung geeignete Merkmale extrahiert und nur diese dann in dem Personendatenspeicher hinterlegt. Dadurch reduziert sich der benötigte Speicherplatz und auch die für einen Vergleich der Daten notwendige Rechenzeit wird aufgrund der reduzierten Datenmenge verringert.

Eine Abweichung zwischen den gespeicherten und den erfassten biometrischen Daten kann insbesondere durch eine Varianz in der Person des Bedieners oder durch geänderte Umgebungsbedingungen auftreten. Sofern die biometrischen Daten auf einer Gesichtserkennung über eine Kamera basieren, kann z. B. durch eine natürliche Alterung oder eine neue Frisur eine Anpassung der biometrischen Daten notwendig werden. Auch eine geänderte Beleuchtung kann eine Anpassung der Daten notwendig machen.

Sofern die biometrischen Daten auf einer Stimmerkennung über ein Mikrofon basieren, kann z. B. durch eine durch eine Erkältung hervorgerufene Veränderung der Stimmlage eine Anpassung der Daten notwendig machen.

Sofern die biometrischen Daten auf einer Fingerabdruckerkennung über einen Fingerabdrucksensor basieren, kann es z. B. durch partielle Verschmutzungen des Sensors oder des Fingers zu Abweichungen im Messergebnis kommen.

In einer Variante ist vorgesehen, dass die Anpassung der in dem Personendatenspeicher hinterlegten biometrischen Daten gewichtet erfolgt. Das bedeutet, dass die hinterlegten biometrischen Daten nicht ersetzt werden, sondern an die neu erfassten biometrischen Daten angepasst werden. Die biometrischen Daten werden jeweils mit einem Gewichtungsfaktor versehen und miteinander verrechnet. Das Ergebnis aus der Verrechnung der biometrischen Daten wird in dem Personendatenspeicher als neuer biometrischer Datensatz abgelegt.

So kann z. B. eine schrittweise Anpassung der Daten vorgenommen werden, indem ein Durchschnitt aus den Daten ermittelt wird, wobei die gemessenen Daten zu einem kleineren Teil, vorzugsweise zu einem zwischen 10% und 40% liegenden Prozentsatz berücksichtigt werden. Die gespeicherten Daten gehen demgemäß jeweils zu einem Prozentsatz von 90% bis 60% in das Ergebnis ein. Diese Art der prozentualen Verrechnung hat den Vorteil, dass Messfehler das Ergebnis nicht sehr stark verfälschen und die Betriebssicherheit der Waage auch bei sporadisch auftretenden extremen Messfehlern sicher erhalten bleibt. Es kann auch vorgesehen sein, dass gemessene Daten, die sich außerhalb eines voreinstellbaren Messfensters bewegen als Messfehler erkannt und nicht berücksichtigt werden.

Es kann auch vorgesehen sein, dass die gemessenen biometrischen Daten mit einem Zeit- und/oder Datumstempel versehen und zusätzlich zu den bereits hinterlegten biometrischen Daten in dem Personendatenspeicher hinterlegt werden. Eine Steuervorrichtung errechnet dann aus den gespeicherten Daten einen Messbereich, der als Vergleichsbereich zu der Identifikation eines Benutzers herangezogen wird. Bei der Ermittlung des Messbereichs kann eine Gewichtung der Daten erfolgen, indem die jüngeren biometrischen Daten eine höhere Gewichtung erhalten als die älteren biometrischen Daten.

Um eine rasche und einfache Bedienung der Waage zu erreichen ist vorgesehen, dass die Wiegedaten von der Steuerungsvorrichtung automatisch mit der Bedieneridentität verknüpft werden. Das verbundene Datum aus dem Gewichtswert und der Benutzeridentität wird dann in einem Verkaufsspeicher fortlaufend abgelegt. Dabei kann das verbundene Datum aus einem gemeinsamen Datensatz bestehen, oder es kann der Gewichtswert in einer Tabelle oder in einer Matrix abgespeichert werden, wobei die Tabelle oder die Matrix eine Struktur aufweist, die eine eindeutige Zuordnung zu der Benutzeridentität ermöglicht.

Der Verkaufsspeicher ist ein elektronisch les- und beschreibbarer Speicher oder Speicherbereich, vorzugsweise ein RAM oder Flash-Speicher, der zur Zwischenspeicherung von Wiegevorgängen dient. Die zwischengespeicherten Wiegedaten werden am Ende eines Verkaufsvorganges zum Zweck der Rechnungserstellung abgerufen, wobei anhand der Bedieneridentität die Zugehörigkeit der Daten zu einem Bediener oder einem Verkaufsvorgang selektiert wird. So wird ermöglicht, dass ein Verkaufsvorgang weitgehend automatisiert abläuft. Ein Bediener der Waage muss nur noch sehr wenige manuelle Eingaben vornehmen. Der Bediener wird vorzugsweise beim Herantreten an die Waage automatisch erkannt. Eine manuelle Eingabe der Bedieneridentität ist somit nicht mehr notwendig. Auch die Wiegedaten werden automatisch erfasst und gespeichert. Somit reduzieren sich die notwendigen Eingaben an der Waage, oder die Handgriffe zu deren Bedienung auf ein Minimum.

Bediener oder Benutzer bedeutet in diesem Kontext einen Benutzer der Waage, der in einem Laden einen Kunden bedient, um z. B. frische Lebensmittel wie Fleisch, Wurst oder Käse abzuwiegen und zu verpacken. Alle Bediener oder Benutzer sind jedenfalls eine Gruppe Individuen von definierter Zahl, deren biometrische Daten in dem Personenspeicher hinterlegt sind. Es ist jedoch auch denkbar, dass ein Kunde als Bediener oder Benutzer einer Waage, insbesondere einer SB bzw. Selbstbedienungswaage tätig wird, indem der Kunde sich z. B. als Stammkunde registrieren lässt und dabei seine biometrischen Daten in dem Personenspeicher hinterlegt.

Eine Registrierung bzw. Hinterlegung der biometrischen Daten geschieht durch Anlegen eines Benutzerprofils und Erfassen der zugehörigen biometrischen Daten über einen biometrischen Sensor.

Es können an einer Waage nacheinander mehrere Kunden und/oder Bediener tätig sein oder ein Kunde und/oder Bediener nutzt nacheinander mehrere Waagen. Über die Bedieneridentifikation anhand der biometrischen Daten und der automatischen Verknüpfung der Wiegedaten mit der Bedieneridentität, können die Wiegedaten in einem zentralen Verkaufsspeicher insbesondere fortlaufend abgelegt werden, ohne dass zu jedem Wiegevorgang Eingaben wie Passwort oder Schlüssel zur Identifikation notwendig werden. Am Ende eines Verkaufsvorganges können dann von irgendeinem beliebigen angeschlossenen Gerät, alle zu einer Benutzeridentität gehörenden und/oder zu einem Verkaufsvorgang gehörenden Wiegedaten zur Rechnungserstellung abgerufen werden.

Es zeigen,
- Figur 1:: Eine schematische Darstellung eines Waagenverbundes aus zwei Ladenwaagen.
- Figur 2:: Ein Verfahren zum Betreiben der Waagen.

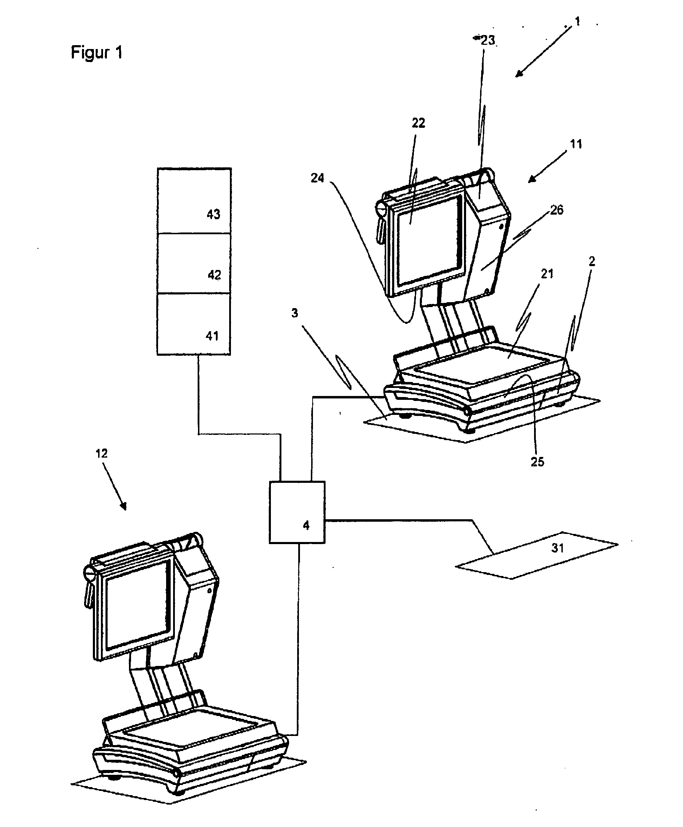

In der **Figur 1** ist schematisch ein Waagenverbund 1 mit zwei einzelnen Ladenwaagen 11, 12 dargestellt. Die Ladenwaagen 11 und 12 sind identisch aufgebaut, so dass hier nur eine der Waagen exemplarisch beschrieben wird. Die Ladenwaage 11 weist ein Gehäuse 2 mit einer Last- bzw. Wiegeplatte 21 auf. Das Gehäuse 2 ist an seiner Unterseite über Füße auf einer ebenen Fläche 3, z. B. einer Verkaufstheke, abstellbar. Die Füße sind in der Höhe verstellbar, um zu gewährleisten, dass die Waage 11 auch bei unebenem Untergrund immer genau horizontal ausgerichtet ist. In dem Gehäuse 2 ist ein nicht dargestellter Gewichtsensor zum Erfassen des Gewichts eines auf die Lastplatte 21 aufgelegten Gegenstandes, also des Wiegeguts, angeordnet.

Das Gehäuse 2 weist zudem einen Drucker 26 zum Drucken von Etiketten und ein Display 22 auf. Das Display 22 ist als Touch-Screen ausgebildet und dient sowohl zur Anzeige als auch zur Eingabe von Daten. Eine Steuerungsvorrichtung 4 ist mit den Waagen 11, 12 und dem Personendatenspeicher 41, dem Verkaufsspeicher 42 und dem Bestandspeicher 43 verbunden. Die Steuerungsvorrichtung 4 und die Speicher, Personendatenspeicher 41, Verkaufsspeicher 42 und Bestandspeicher 43 sind in der Figur schematisch dargestellt. Sie können innerhalb einer Waage integriert angeordnet sein, oder aber separat z. B. in einem räumlich entfernt von den Waagen angeordneten Server installiert sein. Die Speicher 41, 42, 43 können jeweils als physikalisch getrennte, les- und beschreibbare Speicher ausgebildet sein. Sie können jedoch auch auf einem physikalischen Speicher als unterschiedliche Speicherbereiche realisiert werden. Die Verbindung der Steuervorrichtung 4 mit den Speichern 41, 42, 43 und den Waagen 11, 12 ist über digitale Kommunikationsschnittstellen realisiert, die in der Figur 1 als Leitungen skizziert sind.

Vor der Waage 11 ist am Boden eine Personenwaage 31 angeordnet, die einen separaten Gewichtssensor aufweist und mit der Steuervorrichtung 4 verbunden ist. Die Personenwaage 31 erfasst das Gewicht eines Benutzers, der vor der Waage 11 steht und meldet dieses an die Steuervorrichtung 4.

An der Vorderseite des Gehäuses 2 ist ein Näherungssensor 25 angebracht, der eine Annäherung eines Benutzers an die Waage 11 detektiert. Der Näherungssensor ist als passiver Infrarotsensor ausgebildet und erfasst eine Bewegung im Nahbereich vor der Waage 11.

Im oberen Bereich des Gehäuses 2 ist neben dem Display 22 als biometrischer Sensor eine Kamera 23 angeordnet, die zur Erfassung der biometrischen Daten eines Benutzers oder Bedieners der Waage 11 dient. Das Gesichtsfeld der Kamera 23 ist auf einen Benutzer hin gerichtet. Die Kamera 23 nimmt ein Bild auf, welches digitalisiert und einer geometrischen Mustererkennung unterzogen wird, um eine Gesichtserkennung eines Benutzers durchzuführen. Bei der Mustererkennung werden aus dem Bild Erkennungsmerkmale extrahiert, die mit den in dem Personendatenspeicher 41 gespeicherten Daten verglichen werden. Anhand der Daten mit der größten Übereinstimmung wird ein Benutzer identifiziert.

An der Unterseite des Displays 22 ist eine weitere Kamera 24 angeordnet, deren Gesichtsfeld auf die Lastplatte 21 gerichtet ist. Über diese Kamera 24 erfolgt über eine Mustererkennung eine automatische Erkennung der zu wiegenden Waren, so dass notwendige Eingaben zum Bedienen der Waage 11, 12 weitest möglich entfallen können.

Bei einem Wiegevorgang tritt ein Benutzer an die Waage 11 heran. Über den Näherungssensor 25 wird sein Herannahen detektiert und an die Steuerungsvorrichtung 4 gemeldet. Diese initiiert über die Kamera 23 und über die Personenwaage 31 eine Benutzererkennung. Der Benutzer legt Wägegut auf die Lastplatte 21 auf, welches über die Kamera 24 automatisch erkannt wird. Die Steuerungsvorrichtung ruft dann aus dem Bestandspeicher 43 Preisinformationen ab, verknüpft diese automatisch mit den Wiegedaten und der Benutzeridentität und legt bei einer Bestätigung des Wiegevorganges die verbundenen Daten automatisch in dem Verkaufsspeicher 42 ab. Danach können weitere Benutzer die Waage bedienen oder weitere Wiegevorgänge des gleichen Benutzers folgen. Am Ende eines Verkaufsvorganges wird dieser über eine Eingabe des Benutzers abgeschlossen. Die Steuerungsvorrichtung 4 liest alle zu dem Benutzer gehörenden Daten aus dem Verkaufsspeicher und druckt über den Drucker 26 eine Rechnung aus. Die Verkaufsdaten werden dabei aus dem Verkaufsspeicher 42 gelöscht.

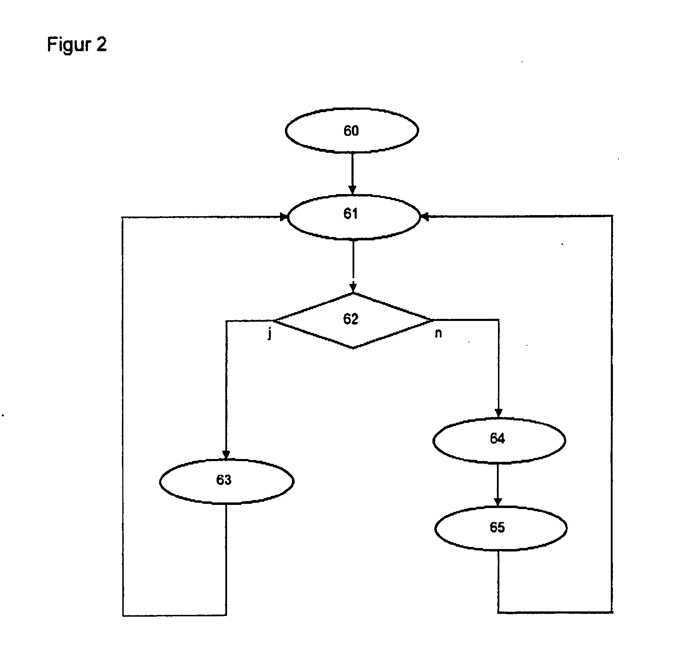

In **Figur 2** ist ein Betriebsverfahren für die Waage 11 bzw. 12 dargestellt. In einem ersten Schritt 60 werden die Benutzer der Waage angelegt und deren biometrische Daten in dem Personendatenspeicher 41 erfasst. Dabei werden über den biometrischen Sensor, also der Kamera 23 eine oder mehrere Messungen durchgeführt, also Bilder aufgenommen, deren Ergebnisse in dem Personendatenspeicher 41 unter der jeweiligen Benutzeridentität abgelegt werden. Als Ergebnis werden hier charakteristische Merkmale verstanden, die eine Benutzeridentifikation ermöglichen. Ein Abspeichern kompletter Bilder ist nicht notwendig.

In dem Schritt 61 erfolgt das Wiegen des Wiegeguts und die Identifizierung des Benutzers. Dazu wird von der Steuerungsvorrichtung 4 eine Benutzererkennung initiiert, also über die Kamera 23 ein Bild eines Benutzers aufgenommen. Dieses Bild wird digital verarbeitet und mit den in dem Personendatenspeicher 41 hinterlegten Daten verglichen. Sofern der Vergleich sicher möglich ist, das heißt oberhalb einer Toleranzschwelle liegt, erfolgt die Identifikation des Benutzers über die Steuervorrichtung 4 automatisch. In Schritt 63 erfolgt das Wiegen und die automatische Verknüpfung oder Verbindung des Wiegeergebnisses mit der Benutzeridentifikation. Dabei wird ein erweitertes Datum geschaffen, das die Benutzeridentität und das Gewicht enthält. Anschließend wird das verknüpfte Wiegedatum in dem Verkaufsspeicher 42 abgespeichert. Der Wiegevorgang ist somit beendet. Die Bedienung der Waage kann nun mit Schritt 61 und einem neuen Wiegevorgang weitergehen.

Sofern der Vergleich kein eindeutiges Ergebnis liefert, d. h. unterhalb der Toleranzschwelle liegt, geht das Verfahren mit Schritt 64 weiter. Bei Schritt 64 zeigt die Steuervorrichtung 4 eine Auswahl der besten Treffer auf dem Display 22 an. Es ist vorgesehen, dass die drei wahrscheinlichsten Benutzer angezeigt werden. Die Anzeige kann durch Anzeige als Passbild oder der Namen in Klartext erfolgen. Daraufhin kann der Benutzer z. B. durch Antippen der richtigen Auswahl sich identifizieren, und damit den richtigen Benutzers wählen.

Es ist vorgesehen, dass die Toleranzschwelle einstellbar ist. So kann z. B. eine Toleranz an eine spezielle Umgebung angepasst werden um eine kundenspezifische Erkennrate einzustellen. So kann z.B. bei einem auf wenige Personen begrenzten Kreis an Benutzern die Toleranzschwelle großzügiger eingestellt werden, als bei einer großen Menge an Benutzern. Bei einer geringen Anzahl von Benutzern können auch mit relativ geringer Erkennrate gute Ergebnisse erzielt werden. Bei einer großen Anzahl von Benutzern ergeben sich statistisch gesehen mehr Ähnlichkeiten zwischen den Benutzern, so dass eine sichere Erkennung, also mit geringer Toleranz wichtig ist.

In Schritt 65 werden die in dem Personendatenspeicher hinterlegten Daten gepflegt. Das bedeutet, dass wenn die hinterlegten Daten nicht hinreichend waren, um einen Benutzer zu identifizieren, werden diese an die neuen, über den biometrischen Sensor gemessenen Daten angepasst. Dabei werden die neuen gemessenen Daten mit einem prozentualen Faktor versehen und somit gewichtet. Diese werden dann mit den ursprünglichen Daten verrechnet und diese somit angepasst. Durch die Anpassung der Daten kann die Waage auf einfache Weise auf eine Veränderung der biometrischen Daten, die z. B. bei einer Gesichtserkennung auf einer Veränderung des Gesichts oder einer geänderten Beleuchtungssituation basieren können, reagieren. Die Waage ist dadurch selbstlernend ausgebildet und passt sich an neue Daten auf einfache Art und Weise an.

In Schritt 65 erfolgt nach der Identifizierung des Benutzers noch das Wiegen und die automatische Verknüpfung des Wiegeergebnisses mit der Benutzeridentifikation. Anschließend wird das verknüpfte Wiegedatum in dem Verkaufsspeicher 42 abgespeichert. Der Wiegevorgang ist somit beendet. Die Bedienung der Waage kann nun mit Schritt 61 und einem neuen Wiegevorgang weitergehen.

## Patentansprüche

1. Verfahren zum Betrieb einer Waage mit einem Display und einem Gewichtssensor zum Erfassen von Wiegedaten eines Wiegeguts,
wobei zuerst in einem Personendatenspeicher biometrische Bedienerdaten von Bedienern abgelegt werden und dann bei einem Wiegevorgang über einen biometrischen Sensor biometrische Bedienerdaten erfasst und mit den in dem Personendatenspeicher abgelegten Bedienerdaten verglichen werden um einen Bediener zu identifizieren und eine Bedieneridentität festzulegen,
**gekennzeichnet durch** die Schritte,
- Anzeigen einer Auswahl von wahrscheinlichen Bedienern in dem Display zur manuellen Auswahl
- und Anpassen der in dem Personendatenspeicher hinterlegten biometrischen Daten eines ausgewählten Bedieners an die über den biometrischen Sensor erfassten Daten.

2. Verfahren nach Anspruch 1,
bei dem die Anpassung der in dem Personendatenspeicher hinterlegten biometrischen Daten gewichtet erfolgt, indem die hinterlegten biometrischen Daten und die neu erfassten biometrischen Daten jeweils mit einem Gewichtungsfaktor versehen werden und das Ergebnis aus der Verrechnung der Daten gebildet und in dem Personendatenspeicher als neue biometrische Daten abgelegt wird.

3. Verfahren nach Anspruch 2,
bei dem die erfassten biometrischen Daten mit einem Faktor von 0,1 bis 0,4 gewichtet werden und die hinterlegten biometrischen Daten mit einem Faktor 0,9 bis 0,6 gewichtet werden.

4. Verfahren nach Anspruch 1,
bei dem die Anpassung der in dem Personendatenspeicher hinterlegten biometrischen Daten erfolgt, indem die neu erfassten biometrischen Daten mit einem Zeit- oder Datumstempel versehen und zusätzlich zu den bereits hinterlegten biometrischen Daten in dem Personendatenspeicher hinterlegt werden.

5. Verfahren nach Anspruch 4,
bei dem zur Benutzererkennung die in dem Personenspeicher hinterlegten Daten anhand des Zeit - oder Datumsstempels gewichtet werden, wobei die jüngeren biometrischen Daten eine höhere Gewichtung erhalten als die älteren biometrischen Daten.

6. Verfahren nach einem der Ansprüche 1 bis 5,
bei dem eine einstellbare Toleranzschwelle für die Übereinstimmung zwischen den gemessenen biometrischen Daten und den in dem Personendatenspeicher hinterlegten biometrischen Daten vorgesehen ist, oberhalb derer die ermittelte Bedieneridentität automatisch mit den Wiegedaten verknüpft wird.

7. Verfahren nach einem der Ansprüche 1 bis 5,
bei dem das Verknüpfen der Wiegedaten mit der Bedieneridentität nach einer manuellen Auswahl der Benutzeridentität automatisch erfolgt.

8. Verfahren nach einem der Ansprüche 1 bis 7,
bei dem die mit der Bedieneridentität verknüpften Wiegedaten in einem Verkaufsspeicher fortlaufend abgelegt werden.

9. Verfahren nach einem der vorhergehenden Ansprüche,
bei dem am Ende eines Verkaufsvorgangs alle zu einer Bedieneridentität gehörenden Wiegedaten aus dem Verkaufsspeicher ausgelesen und zum Erstellen einer Rechnung an einem Drucker oder an eine Kasse übertragen werden.

10. Verfahren nach einem der Ansprüche 1 bis 9,
bei dem die biometrischen Daten anhand einer Gesichtserkennung, basierend auf einem von einer Kamera aufgenommenen Bild berechnet werden.

11. Verfahren nach einem der Ansprüche 1 bis 9,
bei dem die biometrischen Daten anhand einer Stimmerkennung, basierend auf einem von einem Mikrofon aufgenommenen Stimmenmuster berechnet werden.

12. Verfahren nach einem der Ansprüche 1 bis 9,
bei dem die biometrischen Daten anhand eines Fingerabdrucksmuster, basierend auf einem von einem Fingerabdrucksensor aufgenommenen Fingerabdrucks berechnet werden.

13. Verfahren nach einem der Ansprüche 8 bis 12,
bei dem in dem Verkaufsspeicher die Wiegedaten mehrerer Wagen und mehrerer Bediener fortlaufend abgelegt werden.

## Claims

1. Method for operating scales with a display and a weight sensor for capturing weighing data of a product to be weighed,
with, initially, biometric operator data of operators being stored in a personal-data memory and then, during a weighing process, biometric operator data being captured by a biometric sensor and compared to the operator data stored in the personal-data memory in order to identify an operator and set an operator identity, **characterized by** the following steps:
- displaying a selection of probable operators on the display for manual selection
- and matching the biometric data of a selected operator, stored in the personal-data memory, to the data captured by the biometric sensor.

2. Method according to Claim 1,
in which there is weighted matching of the biometric data stored in the personal-data memory by respectively providing the stored biometric data and the newly-captured biometric data with a weighting factor and forming the result by performing operations on the data and storing said result as new biometric data in the personal-data memory.

3. Method according to Claim 2,
in which the captured biometric data is weighted with a factor of between 0.1 and 0.4 and the stored biometric data is weighted with a factor of between 0.9 and 0.6.

4. Method according to Claim 1,
in which there is matching of the biometric data stored in the personal-data memory by providing the newly captured biometric data with a time stamp or a date stamp and storing said data in the personal-data memory in addition to the previously stored biometric data.

5. Method according to Claim 4,
in which the data stored in the personal-data memory is weighted on the basis of the time stamp or the date stamp for operator recognition purposes, with the more recent biometric data obtaining a higher weighting than the older biometric data.

6. Method according to one of Claims 1 to 5,
in which provision is made for an adjustable tolerance threshold for the correspondence between the measured biometric data and the biometric data stored in the personal-data memory, above which tolerance threshold the established operator identity is automatically linked to the weighing data.

7. Method according to one of Claims 1 to 5,
in which the weighing data is automatically linked to the operator identity after a manual selection of the operator identity.

8. Method according to one of Claims 1 to 7,
in which the weighing data linked to the operator identity is continuously stored in a sales memory.

9. Method according to one of the preceding claims,
in which, at the end of a sales process, all weighing data belonging to one operator identity is read out of the sales memory and transmitted to a printer or a till in order to create an invoice.

10. Method according to one of Claims 1 to 9,
in which the biometric data is calculated on the basis of facial recognition, which is based on an image recorded by a camera.

11. Method according to one of Claims 1 to 9,
in which the biometric data is calculated on the basis of voice recognition, which is based on a voice pattern recorded by a microphone.

12. Method according to one of Claims 1 to 9,
in which the biometric data is calculated on the basis of a finger-print pattern, which is based on a finger print recorded by a finger-print sensor.

13. Method according to one of Claims 8 to 12,
in which the weighing data from a number of scales and a number of operators are continuously stored in the sales memory.

## Revendications

1. Procédé destiné au fonctionnement d'une balance avec un affichage et un capteur de poids pour l'enregistrement de données de pesage d'un produit à peser,
dans lequel on dépose d'abord des données biométriques d'opérateurs dans une mémoire de données personnelles et on enregistre ensuite lors d'un processus de pesage, les données biométriques d'opérateurs au moyen d'un capteur biométrique et on les compare ensuite avec les données d'opérateurs déposées dans la mémoire de données personnelles pour identifier un opérateur et établir une identité d'opérateur
**caractérisé par** les étapes,
- affichage sur l'affichage d'une sélection d'opérateurs probables pour la sélection manuelle
- et adaptation des données biométriques d'un opérateur sélectionné, déposées dans la mémoire de données personnelles, aux données enregistrées au moyen du capteur biométrique.

2. Procédé selon la revendication 1,
dans lequel l'adaptation des données biométriques déposées dans la mémoire de données personnelles s'effectue de manière pondérée, dans la mesure où les données biométriques déposées et les données biométriques nouvellement enregistrées sont associées respectivement à un facteur de pondération et le résultat est formé à partir du calcul des données et est déposé dans la mémoire de données personnelles comme nouvelles données biométriques.

3. Procédé selon la revendication 2,
dans lequel les données biométriques enregistrées sont pondérées par un facteur de 0,1 à 0,4 et les données biométriques déposées sont pondérées par un facteur 0,9 à 0,6.

4. Procédé selon la revendication 1,
dans lequel l'adaptation des données biométriques déposées dans la mémoire de données personnelles s'effectue en dotant les données biométriques nouvellement enregistrées d'un tampon d'heure ou de date et en les déposant de plus dans la mémoire de données personnelles avec les données biométriques déjà déposées.

5. Procédé selon la revendication 4,
dans lequel pour la reconnaissance de l'utilisateur, les données déposées dans la mémoire de données personnelle sont pondérées à l'aide des tampons d'heure ou de date, les données biométriques plus récentes bénéficiant d'une pondération plus élevée que les données biométriques plus anciennes.

6. Procédé selon une des revendications 1 à 5,
dans lequel on a prévu un seuil de tolérance réglable pour la coïncidence entre les données biométriques mesurées et les données biométriques déposées dans la mémoire de données personnelles, au-dessus duquel l'identité déterminée de l'opérateur est automatiquement associée aux données de pesage.

7. Procédé selon une des revendications 1 à 5,
dans lequel l'association des données de pesage avec l'identité de l'opérateur après une sélection manuelle de l'identité de l'utilisateur s'effectue automatiquement.

8. Procédé selon une des revendications 1 à 7,
dans lequel les données de pesage associées à l'identité de l'opérateur sont déposées en continu dans une mémoire des ventes.

9. Procédé selon une des revendications précédentes,
dans lequel à la fin d'un processus de vente, toutes les données de pesage appartenant à une identité d'opérateur sont lues à partir de la mémoire de ventes et sont transmises à une imprimante ou à une caisse pour établir une facture.

10. Procédé selon une des revendications 1 à 9,
dans lequel les données biométriques sont calculées à l'aide d'une reconnaissance du visage, basée sur une image enregistrée par une caméra.

11. Procédé selon une des revendications 1 à 9,
dans lequel les données biométriques sont calculées à l'aide d'une reconnaissance de la voix, basée sur un modèle de voix enregistré par un microphone.

12. Procédé selon une des revendications 1 à 9,
dans lequel les données biométriques sont calculées à l'aide d'un modèle d'empreinte digitale, basé sur une empreinte digitale enregistrée par un capteur d'empreintes digitales.

13. Procédé selon une des revendications 8 à 12,
dans lequel les données de pesage de plusieurs chariots et de plusieurs opérateurs sont déposées en continu dans la mémoire des ventes.
